# EUROPEAN PATENT APPLICATION

(11) **EP 4 733 519 A1**
(43) Date of publication of application: **29.04.2026**
(21) Application number: 24842476.4
(22) Date of filing: 18.09.2024
(51) Int. Cl.: E04H 4/16, E02B 15/10, B63B 35/32

(54) **CLEANING ROBOT AND OVERWATER MACHINE BODY**

(30) Priority: 18.07.2023 CN 202310886504; 16.10.2023 CN 202322781641 U; 07.12.2023 CN 202311684730
(71) Applicant: Shenzhen Lesongge Technology Limited, Shenzhen, Guangdong 518000 (CN)
(72) Inventor: HUANG, Zhicong, Shenzhen, Guangdong 518000 (CN)
(74) Representative: Santarelli
(86) International application number: PCT/CN2024/119391
(87) International publication number: WO 2025/016491

(57) **Abstract**

A cleaning robot (1000), comprising a water-surface body (100) and an underwater body (200) detachably connected to the water-surface body (100). The water-surface body (100) is configured for floating on the surface of a working water area. The underwater body (200) is configured for cleaning at least one of the working water area and the wall surface of a pool. The water-surface body (100) comprises a functional module (2), which comprises at least one of a power supply module (21), a collection module (22), a driving module (23), a communication module (24), a sensor module (25), an alert module (26), a water-quality detection module (27) or a water-quality improvement module (280). The cleaning robot (1000) in the present application can achieve separation of the water-surface body (100) from the underwater body (200), so that the two can be separately operated. The water-surface body (100) can also be assembled and connected with the underwater body (200), so that the two can work cooperatively. The water-surface body (100) can expand the functions of the cleaning robot (1000), so that the functions of the cleaning robot (1000) are diversified.

## Description

This application claims priority to Chinese Patent Application No. 202310886504.7, filed on July 18, 2023 with Chinese patent office, titled "Cleaning Robot and Water-surface body" (hereinafter referred to as "Prior Application 1"); Chinese Patent Application No. 202311684730.3, filed on December 7, 2023 with Chinese patent office, titled "Underwater Cleaning Robot" (hereinafter referred to as "Prior Application 2"); and Chinese Utility Model Application No. 202322781641.2, filed on October 16, 2023 with Chinese patent office, titled "Water Surface Cleaning Device and Pool Cleaning Equipment" (hereinafter referred to as "Prior Application 3"). The entire contents of Prior Application 1 form the basis of this application, and Prior Applications 2 and 3 are incorporated herein by reference.

### Technical Field

The present application relates to the field of cleaning equipment, and in particular, to a cleaning robot and a water-surface body.

### Background of the Invention

Cleaning robots operating in aquatic environments can remove various types of debris, such as floating materials on the water surface (e.g., fallen leaves and dead insects), settled particles (e.g., sand and gravel), and deposits adhering to the walls of water tanks. However, different application scenarios impose different functional requirements on cleaning robots. In related technologies, existing cleaning robots generally provide only a single function, and such single-function cleaning robots are unable to meet the demands of use across diverse application scenarios.

### Summary of the Invention

The present application provides a cleaning robot and a water-surface body, which aims to diversify the functions of the cleaning robot.

In a first aspect, embodiments of the present application provide a cleaning robot, which comprises:
a water-surface body configured to float on a surface of a working water area;
an underwater body detachably connected to the water-surface body and configured to clean at least one of the working water area and a wall surface of a pool;
wherein the water-surface body includes:
   a functional module including at least one of a power supply module, a collection module, a driving module, a communication module, a sensor module, an alert module, a water-quality detection module, or a water-quality improvement module.

In a second aspect, embodiments of the present application further provide a water-surface body configured to float on a surface of a working water area and detachably connected to an underwater body of a cleaning robot; the water-surface body including:
a functional module including at least one of a power supply module, a collection module, a driving module, a communication module, a sensor module, an alert module, a water-quality detection module, or a water-quality improvement module.

The cleaning robot and the water-surface body provided in the present application are configured such that the water-surface body and the underwater body are detachably connected. The water-surface body includes a functional module, the functional module including at least one of a power supply module, a collection module, a driving module, a communication module, a sensor module, an alert module, a water-quality detection module, or a water-quality improvement module. Therefore, when either the water-surface body or the underwater body needs to be used independently, they may be separated, allowing at least one of them to operate flexibly and independently according to actual requirements, thereby reducing the electrical load and overall weight of the cleaning robot. When the water-surface body and the underwater body are required to operate together, they may be assembled and connected. On the basis of enabling the cleaning robot to perform cleaning operations via the underwater body, the cleaning robot can additionally provide the functions corresponding to at least one of the power supply module, collection module, driving module, communication module, sensor module, alert module, water-quality detection module, and water-quality improvement module through the water-surface body. As a result, the functional capabilities of the cleaning robot are expanded, enabling diversified functions to meet the usage requirements of different application scenarios.

It should be understood that the foregoing general description and the following detailed description are merely exemplary and illustrative, and do not limit the disclosure of the embodiments of the present application.

### Brief Description of the Drawings

To more clearly illustrate the technical proposals of the embodiments of the present application, the drawings used in the description of the embodiments will be briefly introduced below. Apparently, the drawings described below are only some embodiments of the present application. For those skilled in the art, other drawings can be obtained based on these drawings without creative effort.
FIG. 1 is a schematic diagram of a first structure of the cleaning robot in an exemplary embodiment of the present application;
FIG. 2 is a block diagram showing a structure of the functional module in an exemplary embodiment of the present application;
FIG. 3 is a schematic diagram of the water-surface body in an exemplary embodiment of the present application;
FIG. 4 is a schematic diagram of the float of the underwater body and its cooperating components in an exemplary embodiment of the present application;
FIG. 5 is a schematic diagram showing a joint part between the water-surface body and the underwater body in an exemplary embodiment of the present application;
FIG. 6 is a block diagram showing a structure of the cleaning robot in an exemplary embodiment of the present application;
FIG. 7 is a block diagram showing another structure of the functional module in an exemplary embodiment of the present application;
FIG. 8 is a schematic diagram of a second structure of the cleaning robot in an exemplary embodiment of the present application;
FIG. 9 is a schematic diagram of a third structure of the cleaning robot in an exemplary embodiment of the present application;
FIG. 10 is a schematic diagram of a fourth structure of the cleaning robot in an exemplary embodiment of the present application;
FIG. 11 is a schematic diagram of a fifth structure of the cleaning robot in an exemplary embodiment of the present application;
FIG. 12 is a schematic diagram of a sixth structure of the cleaning robot in an exemplary embodiment of the present application;
FIG. 13 is a schematic diagram of a seventh structure of the cleaning robot in an exemplary embodiment of the present application;
FIG. 14 is a perspective structural view of the water-surface body of the cleaning robot shown in FIGS. 11 and 13, as observed from one viewing angle;
FIG. 15 is a perspective structural view of the water-surface body shown in FIG. 14 from another viewing angle, in which a first connection member is connected to the buoy;
FIG. 16 is an enlarged view of area A in FIG. 15;
FIG. 17 is a perspective structural view of the water-surface body shown in FIG. 14 after removing some of the housing;
FIG. 18 is an exploded view of the water-surface body shown in FIG. 14;
FIG. 19 is a planar schematic diagram of the underwater body of the cleaning robots shown in FIGS. 12 and 13 with the roller-brush driving device arranged inside the body;
FIG. 20 is a perspective structural view of the underwater body shown in FIG. 19;
FIG. 21 is a perspective structural view of the underwater body shown in FIG. 19 after removing components such as the chassis and driving wheels;
FIG. 22 is a top view showing the cooperation of the cleaning brush assembly and other components in the example of the present application; and
FIG. 23 is a planar sectional view of section A-A in FIG. 22.

### Detailed Description of Embodiments

The technical proposals of the embodiments of the present application will be clearly and completely described below with reference to the accompanying drawings. Apparently, the described embodiments are only some embodiments of the present application, not all of them. Based on the embodiments of the present application, all other embodiments obtained by those skilled in the art without creative effort are within the scope of protection of the present application.

In the description of the present application, it should be understood that the terms "center", "longitudinal", "lateral", "length", "width", "thickness", "upper", "lower", "front", "rear", "left", "right", "vertical", "horizontal", "top", "bottom", "inner", "outer", "clockwise", and "counterclockwise", etc., indicating orientation or positional relationships are based on the orientation or positional relationships shown in the accompanying drawings. They are provided for the purpose of facilitating the description of the application and simplifying the explanation, and are not intended to indicate or imply that the referenced apparatus or components must be configured or operated in a particular orientation; therefore, they should not be construed as limiting the present application. Furthermore, the terms "first" and "second" are used for descriptive purposes only and should not be construed as indicating or implying relative importance or implicitly specifying the number of indicated technical features. Thus, features defined as "first" and "second" may explicitly or implicitly include one or more such features. In the description of the present application, "a plurality of" means two or more, unless otherwise explicitly specified.

It should also be understood that the terminology used in the present application is for the purpose of describing particular embodiments only and is not intended to limit the application. As used in the specification and the appended claims, the singular forms "a", "an", and "the" are intended to include the plural forms unless the context clearly indicates otherwise.

It should also be further understood that the term "and/or" as used in the specification and the appended claims means any combination of one or more of the associated listed items and all possible combinations, and includes such combinations.

The following detailed description of some embodiments of the present application is provided in conjunction with the accompanying drawings. Where there is no conflict, the embodiments described below and the features therein may be combined with one another.

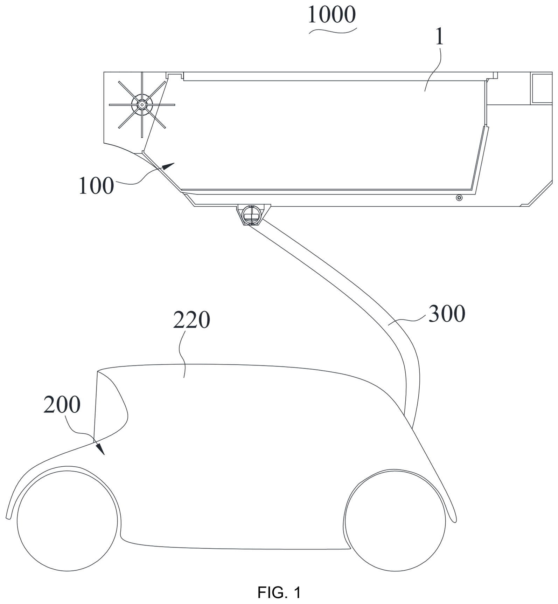

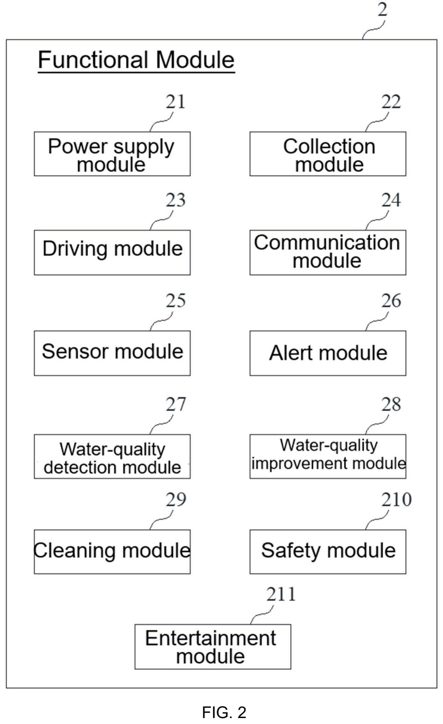

As shown in FIGS. 1 and 2, an embodiment of the present application provides a cleaning robot 1000, which includes a water-surface body 100 and an underwater body 200. The water-surface body 100 is configured to float on the surface of the working water area. The underwater body 200 is detachably connected to the water-surface body 100 and is configured to clean at least one of the working water area and wall surfaces of a pool. The water-surface body 100 includes a functional module 2, which includes at least one of a power supply module 21, a collection module 22, a driving module 23, a communication module 24, a sensor module 25, an alert module 26, a water-quality detection module 27, or a water-quality improvement module 28.

The cleaning robot 1000 provided in the above embodiment is configured such that underwater body 200 is detachably connected to the water-surface body 100, and the water-surface body 100 includes a functional module 2, which includes at least one of a power supply module 21, a collection module 22, a driving module 23, a communication module 24, a sensor module 25, an alert module 26, a water-quality detection module 27, or a water-quality improvement module 28. Therefore, when the water-surface body 100 or the underwater body 200 needs to be used independently, the water-surface body 100 and the underwater body 200 can be separated so that at least one of the water-surface body 100 and the underwater body 200 can operate flexibly and independently according to actual needs, reducing the electrical load and overall weight of the cleaning robot 1000.

When the water-surface body 100 and the underwater body 200 need to operate together, the water-surface body 100 and the underwater body 200 can be assembled and connected. While ensuring that the cleaning robot 1000 can perform cleaning operations through the underwater body 200, the cleaning robot 1000 can also provide functions corresponding to at least one of the following modules through the water-surface body 100: power supply module 21, collection module 22, driving module 23, communication module 24, sensor module 25, alert module 26, water-quality detection module 27, and water-quality improvement module 28. As a result, the functional capabilities of the cleaning robot 1000 are expanded, enabling diversified functions to meet the usage requirements of different application scenarios and good practicability, which is conducive to market promotion and application.

As an example, the cleaning robot 1000 can clean at least one of the sediments attached to the walls of a pool, floating debris (such as fallen leaves, dead insects, etc.) on the water surface, and settled debris (such as sand and gravel). The pool may include a swimming pool, a fish pond, a landscape pond, etc.

As an example, when the water-surface body 100 and the underwater body 200 are connected and performing cleaning operations, the water-surface body 100 can float on the surface of the working water area, while the underwater body 200 can be suspended at different depths or sink to the bottom of the working water area to carry out cleaning. It will be understood that in other embodiments, when the water-surface body 100 and the underwater body 200 are connected and performing cleaning operations, the water-surface body 100 can also be suspended at different depths or sink to the bottom of the working water area as needed.

As an example, when the water-surface body 100 and the underwater body 200 are separated, the water-surface body 100 and the underwater body 200 can selectively perform their functions according to the actual situation; alternatively, the water-surface body 100 or the underwater body 200 can perform their functions independently. The water-surface body 100 can operate by suspending at different depths in the working water area or sinking to the bottom of the working water area as needed. The water-surface body 100 can also operate by floating on the surface of the working water area. The underwater body 200 can perform cleaning operations by suspending at different depths in the working water area or sinking to the bottom of the working water area as needed.

As an example, when the cleaning robot 1000 is not in operation, the water-surface body 100 and the underwater body 200 can be assembled and connected to facilitate the storage or transportation of the cleaning robot 1000; alternatively, the water-surface body 100 and the underwater body 200 can be separated to store or transport them separately.

As an example, the underwater body 200 can filter and clean liquids in the working water area, and the underwater body 200 can clean the wall surfaces of the pool. The wall surfaces of the pool include at least one of the inner peripheral walls and the inner bottom wall of the pool.

As an example, the working water area includes a region in a pool containing liquid. In other embodiments, the working water area may also include a body of water such as an ocean or a lake.

As an example, the functional module 2 includes a power supply module 21, a collection module 22, a driving module 23, a communication module 24, a sensor module 25, an alert module 26, a water-quality detection module 27 or a water-quality improvement module 28.

As an example, the functional module 2 includes at least two of the power supply module 21, the collection module 22, the driving module 23, the communication module 24, the sensor module 25, the alert module 26, the water-quality detection module 27, and the water-quality improvement module 28. For instance, the functional module 2 includes the power supply module 21, the collection module 22, the driving module 23, the communication module 24, the sensor module 25, the alert module 26, the water-quality detection module 27, and the water-quality improvement module 28. Alternatively, for instance, the functional module 2 includes the power supply module 21, the collection module 22, the driving module 23, the communication module 24, and the sensor module 25, etc.

In some embodiments, the underwater body 200 and the water-surface body 100 are detachably connected in at least one of the following manners: a magnetic connection, a snap fitting connection, a threaded fastening connection, an insertion connection, etc. This allows an easy and fast disassembly and assembly of the underwater body 200 and the water-surface body 100.

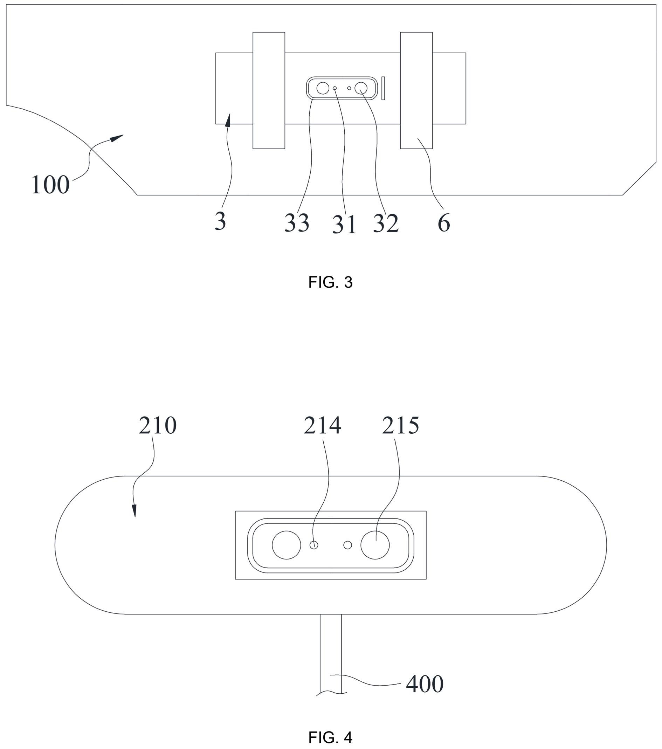

As shown in FIGS. 3 to 5, in some embodiments, the underwater body 200 includes a float for floating on the surface of the working water area. The water-surface body 100 also includes a fitting part 3 detachably connected to the float, such that when the underwater body 200 is suspended at different depths in the working water area or sinks to the bottom for cleaning operations, the connection between the float and the fitting part 3 allows the underwater body 200 and the water-surface body 100 to be connected as a unitary unit for operation. When the underwater body 200 is not required to be connected to the water-surface body 100 as a unitary unit for operation, the float can be detached from the fitting part 3.

As shown in FIGS. 3 and 4, in some embodiments, the fitting part 3 includes a first conductive connecting sub-part 31, and the float includes a second conductive connecting sub-part 214. The first conductive connecting sub-part 31 is configured to be detachably connected with the second conductive connecting sub-part 214 to realize a detachable electrical connection between the underwater body 200 and the water-surface body 100.

As shown in FIGS. 3 to 5, in some embodiments, the fitting part 3 is provided with a first magnetic member 32, which is correspondingly disposed with the first conductive connecting sub-part 31; the underwater body 200 is provided with a second magnetic member 215, which is correspondingly disposed with the second conductive connecting sub-part 214, and the first magnetic member 32 is capable of being magnetically engaged with the second magnetic member 215. As an example, the second magnetic member 215 is disposed on the float. The arrangement of the first magnetic member 32 and the second magnetic member 215 enables rapid positioning and attachment between the fitting part 3 and the float, ensuring a fast and reliable connection between the fitting part 3 and the float and a reliable connection between the first conductive connecting sub-part 31 and the second conductive connecting sub-part 214.

As shown in FIGS. 3 and 4, in some embodiments, the fitting part 3 further includes a liquid-resistant member 33. The liquid-resistant member 33 is disposed around the first conductive connecting sub-part 31 so as to prevent liquid from entering the first conductive connecting sub-part 31 and the second conductive connecting sub-part 214 when they are connected, thereby ensuring the reliability and safety of the electrical connection between the first conductive connecting sub-part 31 and the second conductive connecting sub-part 214. Exemplarily, the liquid-resistant member 33 includes a sealing ring, a rubber ring, or a liquid-resistant layer formed by sealing oil or sealing grease.

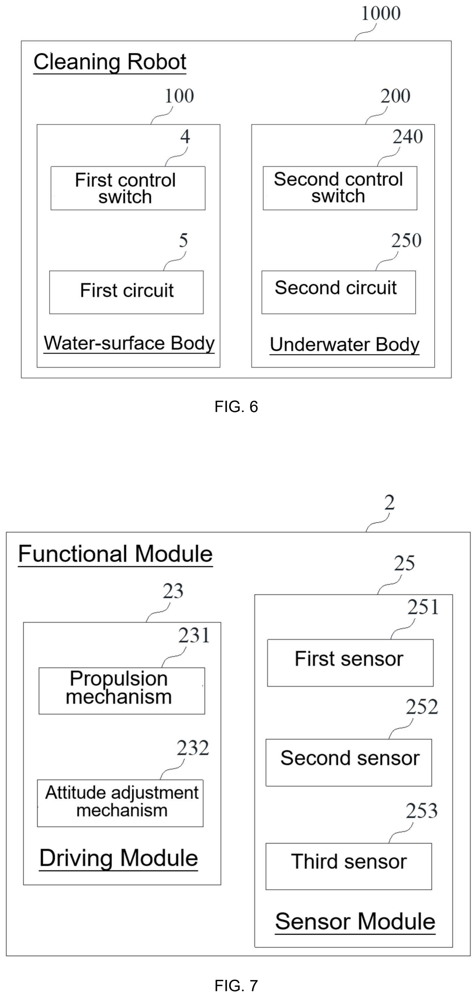

As shown in FIG. 6, in some embodiments, the water-surface body 100 includes a first control switch 4 and a first circuit 5. When the water-surface body 100 is separated from the underwater body 200, the first control switch 4 is configured to control the first conductive connecting sub-part 31 to be electrically disconnected from the first circuit 5, so that the water-surface body 100 separated from the underwater body 200 can be effectively protected from liquid, ensuring the safety of the water-surface body 100 when separated from the underwater body 200.

As shown in FIG. 6, in some embodiments, when the water-surface body 100 is separated from the underwater body 200, the underwater body 200 includes a second control switch 240 and a second circuit 250. The second control switch 240 is configured to control the second conductive connecting sub-part 214 to be electrically disconnected from the second circuit 250, so that the underwater body 200 separated from the water-surface body 100 can be effectively protected from liquid, ensuring the safety of use of the underwater body 200 when separated from the water-surface body 100.

As shown in FIG. 3, exemplarily, the first control switch 4 includes a conductive spring or conductive leaf spring, etc. The second control switch 240 includes a conductive spring or conductive leaf spring, etc.

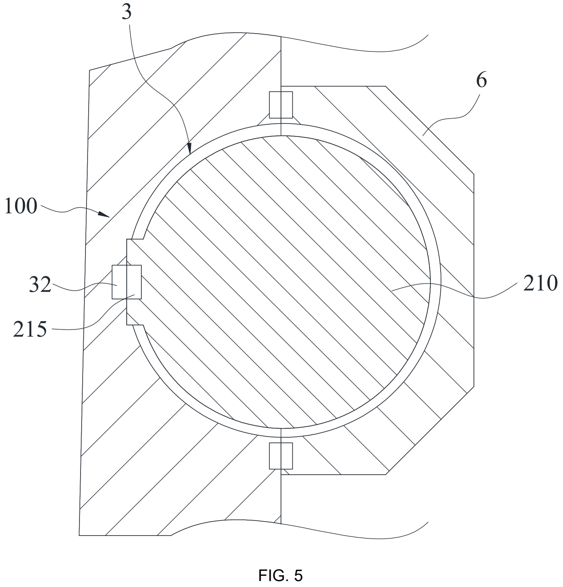

As shown in FIGS. 3 and 5, in some embodiments, the water-surface body 100 includes a locking part 6 movably disposed on the fitting part 3. The locking part 6 is configured to lock the float in place on the fitting part 3. In this way, on the one hand, the liquid-resistant performance at the connection between the fitting part 3 and the float can be enhanced, and on the other hand, the connection reliability between the fitting part 3 and the float can be improved, preventing the float from easily detaching from the fitting part 3 when the water-surface body 100 or the underwater body 200 is towed.

As an example, after the first conductive connecting sub-part 31 and the second conductive connecting sub-part 214 are connected in place, the locking part 6 is moved relative to the fitting part 3, so that the locking part 6 engages with a matching part (not shown) on the fitting part 3 to lock the float. Exemplarily, one end of the locking part 6 is movably connected to the fitting part 3, and the other end thereof can be engaged with or disengaged from the matching part. After the first conductive connecting sub-part 31 and the second conductive connecting sub-part 214 are connected in place, the other end of the locking part 6 is engaged with the matching part to lock the float, thereby improving the connection reliability between the fitting part 3 and the float. When the fitting part 3 is to be separated from the float, the other end of the locking part 6 can be disengaged from the matching part. Exemplarily, one of the locking part 6 and the matching part includes an engagement groove, and the other includes an engagement protrusion.

In some embodiments, as shown in FIG. 2, the functional module of the water-surface body 100 further includes at least one of a cleaning module 29, a safety module, and an entertainment module 211. For example, the functional module includes the power supply module 21, the driving module 23, and the cleaning module 29. Alternatively, the functional module includes the power supply module 21, the communication module 24, the cleaning module 29, and the safety module, etc.

As an example, the cleaning module 29 includes, but is not limited to, a roller brush; the safety module includes, but is not limited to, a level gauge; and the entertainment module 211 includes, but is not limited to, an alarm.

In some embodiments, the power supply module 21 is configured to supply power to at least one of the electronic component of the water-surface body 100 (such as the driving module 23, communication module 24, or sensor module 25) and the underwater body 200, thereby ensuring a normal operation of the water-surface body 100 and the underwater body 200. The power supply module 21 includes at least one of a solar charging panel 211, a battery, and a charging interface 213.

As an example, the solar charging panel 211 can continuously provide power to at least one of the electronic component of the water-surface body 100 and the underwater body 200 by collecting ambient sunlight, thereby reducing the energy consumption of the cleaning robot 1000 and ensuring the endurance of the cleaning robot 1000.

As an example, the battery can store electrical energy and supply power to at least one of the electronic component of the water-surface body 100 and the underwater body 200 to ensure the endurance of the cleaning robot 1000.

As an example, an external power supply device can be connected to the charging interface 213 via an external cable to supply power to at least one of the electronic component of the water-surface body 100 and the underwater body 200, thereby ensuring the endurance of the cleaning robot 1000.

In some embodiments, the collection module 22 is configured to collect debris and/or oil contaminants from the working water area. The collection module 22 includes at least one of a skimmer 221, an oil skimmer, a debris collection module 222, etc. Thus, when the water-surface body 100 and the underwater body 200 are assembled and connected, the water-surface body 100 can filter or clean the liquid in the working water area, and the underwater body 200 can clean at least one of the working water area and the pool walls. The water-surface body 100 and the underwater body 200 can work simultaneously, effectively improving the cleaning efficiency of the cleaning robot 1000 and enhancing the user experience.

As an example, the waste collection module 222 may include a debris collection device or a debris processing device. When cleaning the liquid surface, the debris collected can be crushed by the debris collection device or the debris processing device.

As shown in FIG. 7, in some embodiments, the driving module 23 is configured to drive the movement of the water-surface body 100. The driving module 23 includes at least one of a propulsion mechanism 231 and an attitude adjustment mechanism 232. The propulsion mechanism 231 is configured to drive the water-surface body 100 to travel, and the attitude adjustment mechanism 232 is configured to adjust the attitude of the water-surface body 100. The driving module 23 enables the water-surface body 100 to perform at least one of traveling and changing direction. As an example, the attitude adjustment mechanism 232 may include two electric driving wheels 222 independently mounted on both sides of the bottom of the water-surface body 100, which use the speed difference between the two wheels 222 to turn, thereby achieving movement and directional changes of the water-surface body 100.

It will be understood that, in some scenarios, relying on the underwater body 200 to drag the water-surface body 100 makes it difficult for the water-surface body 100 to move precisely to a target location. In this embodiment, the water-surface body 100 can actively move under the drive of the driving module 23 to fine-tune its position or attitude, thereby enabling the water-surface body 100 to reach the target location more accurately for cleaning or other tasks.

In other embodiments, the driving module 23 may be omitted or not operated, and the underwater body 200 may cause the water-surface body 100 to move.

In some embodiments, the propulsion mechanism 231 includes at least one of a motor, a servo motor, a propeller structure, a sail, or a jet propulsion structure. The attitude adjustment mechanism 232 includes at least one of a motor, a servo motor, a propeller structure, a sail, or a jet propulsion structure.

As an example, the sail is located on a water-surface portion of the water-surface body 100 and can use wind power to assist in driving the movement of water-surface body 100 to move. This allows the water-surface body 100 to move within a certain range while reducing the electrical or fuel energy required to power its motion.

As an example, the jet propulsion structure may include two nozzles and associated structures. The two nozzles are positioned along the geometric centerline of the water-surface body 100 with opposing spray directions, forming an angle of 1° between extension lines of the spray directions. By adjusting the flow rate of the two nozzles, the water-surface body 100 can move forward or backward. In other embodiments, the jet propulsion structure may include two non-collinear nozzles positioned at the bottom of the water-surface body 100. By controlling the differential flow and jet speed of the two nozzles, the water-surface body 100 can turn or move forward.

In some embodiments, the communication module 24 is configured for communication connection between the cleaning robot 1000 and an external device. Compared to a communication module 24 arranged on a second body 220 of the underwater body 200, the communication module 24 in this embodiment is arranged on the water-surface body 100, such that the water-surface body 100 and the communication module 24 can float on the surface of the working water area during operation, reducing the influence of the liquid on electromagnetic waves and improving communication quality and stability. Furthermore, since the water-surface body 100 is relatively large, and in some embodiments, a power supply module 21 is provided on the water-surface body 100, the power supply of the entire system is more sufficient, overcoming limitations on the size and power of the communication module 24. This allows for an increase in the design power of the communication module 24, ensuring communication quality to a certain extent. Exemplarily, the external device may include at least one of a maintenance base station, a terminal (such as a mobile phone), or a remote control.

As shown in FIG. 7, in some embodiments, the sensor module 25 includes a first sensor 251, which is configured to detect a first position information of the water-surface body 100. The water-surface body 100 can form a full-map mode by using the first sensor 251 for positioning and navigation, thereby enabling cleaning of target areas on the surface or at the bottom of the working water area.

As an example, the first sensor 251 is located on the water surface of the water-surface body 100. As an example, the first sensor 251 is arranged on a portion of the water-surface body 100 above the water surface. When the water-surface body 100 floats on the surface of the working water area, the first sensor 251 can also float on the surface of the working water area, reducing the influence of the liquid in the working water area on the first sensor 251 and improving the positioning accuracy.

As an example, the first sensor 251 includes at least one of a binocular vision sensor 2511, a LiDAR sensor 2512, or a global positioning system sensor 2513.

As an example, the first position information is the position information of the water-surface body 100 relative to a first reference object, which may include the earth, the pool, a preset position of the pool, or the underwater body 200, etc.

In some embodiments, the underwater body 200 can acquire a second position information of the underwater body 200, so that the underwater body 200 can control its movement according to the second position information, locating and navigating the position of the underwater body 200, thereby realizing the cleaning of a target area on the surface or at the bottom of the working water area.

Alternatively, as shown in FIG. 7, in some embodiments, the sensor module 25 includes a second sensor 252, which is configured to detect environmental information around the water-surface body 100. The environmental information may include obstacle information, floating object information, etc.; the environmental information may also include at least one of a second position information of the underwater body 200, a position information of debris, and a position information of obstacles.

As an example, the environmental information includes the position information of the debris, and based on the position information of the debris, the water-surface body 100 or the underwater body 200 can move to the corresponding location to clean the debris. Exemplarily, the environmental information includes the position information of obstacles, so that the water-surface body 100 or the underwater body 200 can avoid obstacles, thereby ensuring that the cleaning robot 1000 operates smoothly.

When the environmental information includes the second position information of the underwater body 200, the water-surface body 100 can form a communication connection with the underwater body 200, enabling the underwater body 200 to control its movement based on the second position information obtained from the water-surface body 100. The second sensor 252 can track the underwater body 200 and determine its relative position, assisting in navigation and positioning, thereby better planning the overall cleaning path.

As an example, the second sensor 252 is arranged on a portion of the water-surface body 100 above the water surface. When the water-surface body 100 is able to float on the surface of the working water area, the second sensor 252 operates floating on the liquid surface of the working water area, reducing the influence of the liquid in the working water area on the second sensor 252 and improving the navigation and positioning accuracy of the underwater body 200.

As an example, the second sensor 252 is arranged on a portion of the water-surface body 100 below the water surface. When the water-surface body 100 is able to float on the surface of the working water area, the second sensor 252 operates below the liquid surface of the working water area, reducing the impact of surface fluctuations on the second sensor 252 and improving the navigation and positioning accuracy of the underwater body 200.

As an example, the second position information is the position information of the underwater body 200 relative to a second reference object, which may include a preset position of the pool or the water-surface body 100, etc.

As an example, the first sensor 251 can detect the first position information of the water-surface body 100, and the second sensor 252 can detect the second position information of the underwater body 200 relative to the water-surface body 100. The water-surface body 100 can communicate with the underwater body 200, so that the cleaning robot 1000 can navigate and locate the underwater body 200 according to the first and second position information, so as to better plan the overall cleaning path.

As an example, the second sensor 252 includes at least one of a visual sensor 2521, a time-of-flight (TOF) sensor, an ultrasonic sensor, a laser rangefinder, an infrared rangefinder, a sonar sensor, or a radar.

In some embodiments, the water-quality detection module 27 is configured to detect the water quality parameters of the liquid. Exemplarily, based on the water quality parameters, it can be determined whether subsequent work such as water-quality improvement should be carried out on the liquid in the working water area.

In some embodiments, the water-quality improvement module 28 is configured to dispense a water treatment material. As an example, when water quality parameters meet preset conditions, the water-quality improvement module 28 can dispense a water treatment material into the working water area, thereby improving the water quality of the liquid within the working water area. As an example, the water treatment material includes at least one of a purification material and a sterilization material.

As an example, the water-quality detection module 27 can detect the water quality parameters of the pool. When the water quality is poor, the water-quality improvement module 28 can release drugs to improve the water quality. Additionally, the water-quality detection module 27 can communicate with a user terminal through the communication module to generate a water-quality detection report on the user terminal's app. The user can also manually control the release of drugs by a drug releasing module through the app.

In some embodiments, the alert module 26 is configured to notify people around the cleaning robot 1000 of its presence, thereby improving the operational safety of the cleaning robot 1000. The alert module 26 can provide notifications using at least one of light, sound, or signs. Exemplarily, the alert module 26 includes at least one of an alert unit and a speaker.

It will be understood that the number of the water-surface body 100 can be determined according to actual needs, such as one, two, three, four, or more. As an example, a plurality of water-surface bodies 100 are provided, which can be selectively connected to the underwater body 200. The water-surface bodies 100 can be configured with different functional modules; alternatively, the water-surface bodies 100 can be connected to the underwater body 200 simultaneously. No specific limitation is imposed here, and users can adapt the configuration based on the actual usage scenario.

As shown in FIGS. 1 and 8-13, in some embodiments, the cleaning robot 1000 further includes a first connection member 300, through which the water-surface body 100 is detachably connected to the underwater body 200. Exemplarily, the water-surface body 100 is connected to the underwater body 200 through the first connection member 300. The water-surface body 100 can float on the water surface to perform cleaning under the driving of the underwater body 200, without requiring a drive module or power. In actual applications, to better achieve coordinated operation between the water-surface body 100 and the underwater body 200, they can also be directly connected electrically and/or communicatively through the first connection member 300 for information exchange.

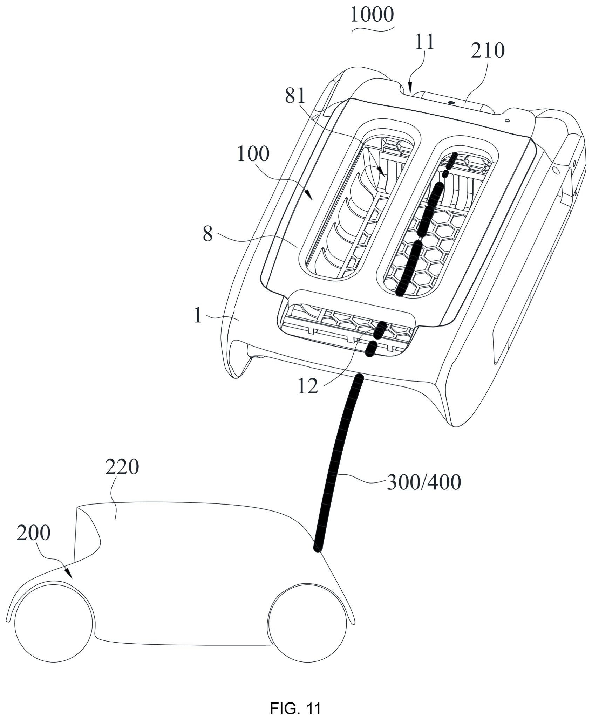

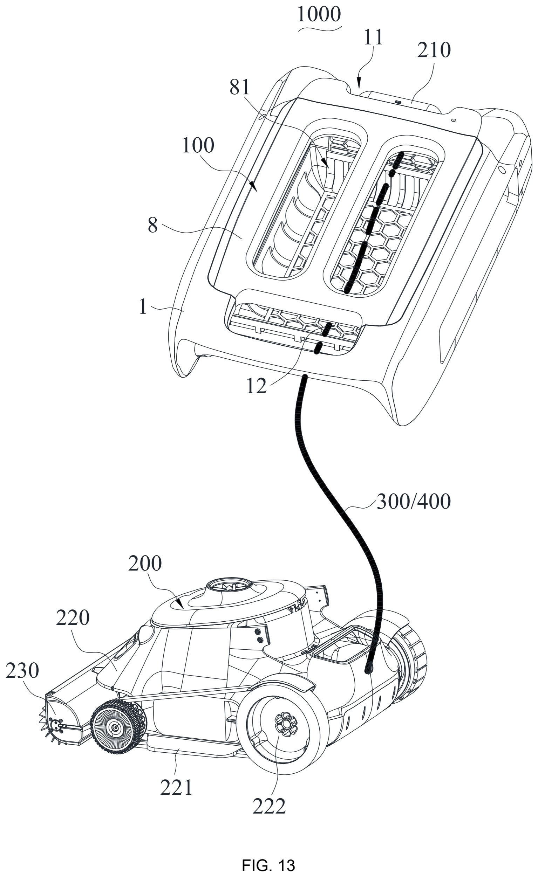

It should be noted that the schematic diagrams of the water-surface body 100 shown in FIGS. 1, 8-10, and 12 are merely illustrative and do not intend to limit the number, shape, and/or structure of the water-surface body 100. In actual applications, the number, shape, and/or structure of the water-surface body 100 can be modified according to the actual application scenario. As an example, as shown in FIGS. 11 and 13, the structural schematic diagrams of the water-surface body 100 illustrate one practical structure adopted.

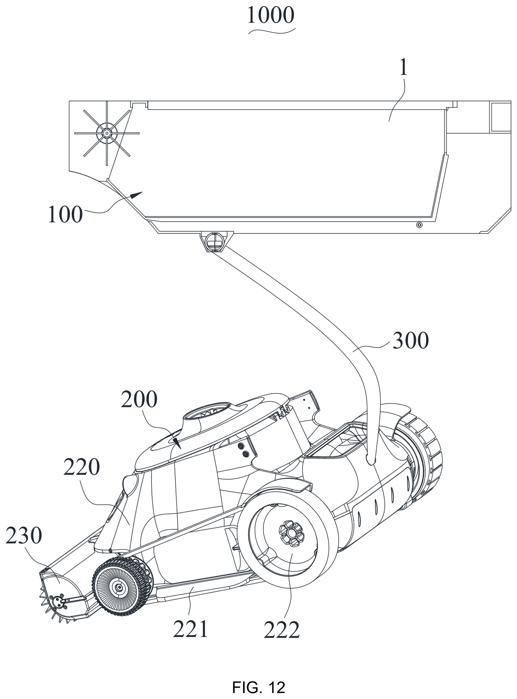

Similarly, as shown in FIGS. 1 and 8-11, the schematic diagrams of the underwater body 200 are merely illustrative and do not intend to limit the shape and/or structure of the underwater body 200. In actual applications, the shape and/or structure of the underwater body 200 can be modified according to the actual application scenario. As an example, as shown in FIGS. 12 and 13, the structural schematic diagrams of the underwater body 200 illustrate one practical structure adopted.

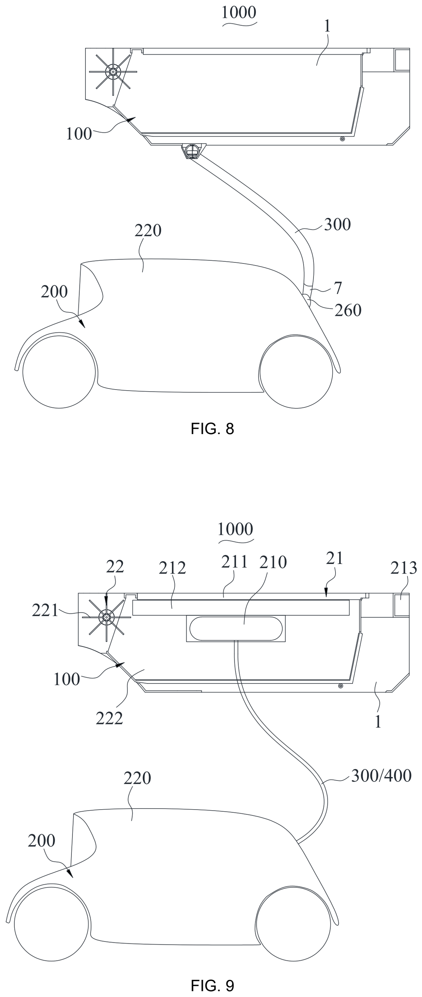

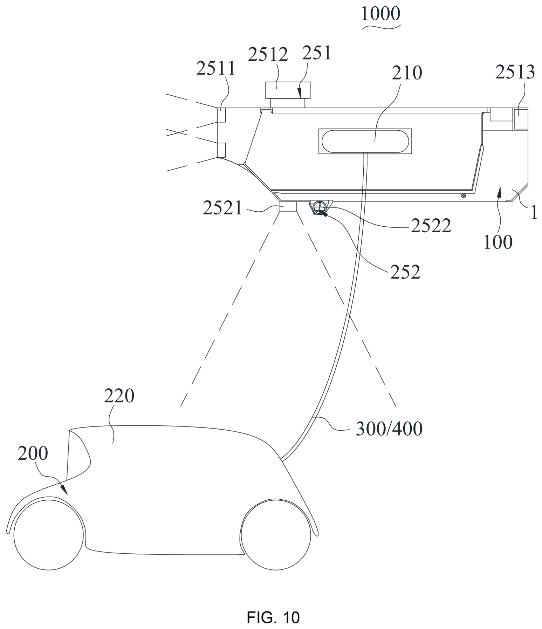

In some embodiments, as shown in FIGS. 9 and 10, the underwater body 200 further includes a float detachably connected to the water-surface body 100. It will be understood that since the water-surface body 100 floats on the surface of the working water area, the float, by being directly mounted on the water-surface body 100, can also float on the surface of the working water area along with the water-surface body 100.

In some embodiments, as shown in FIGS. 9-11 and 13, the cleaning robot 1000 further includes a second connection member 400, and the underwater body 200 further includes a float that floats on the liquid surface and is detachably connected to the main body of the underwater body 200 via the second connection member 400.

As an example, the float can float directly on the liquid surface via the connection of the second connection member 400, alternatively, when the float is detachably connected to the water-surface body 100, the float can further be connected to the underwater body 200 via the second connection member 400 or the first connection member 300. As shown in FIGS. 9-11 and 13, the first connection member 300 and the second connection member 400 can be combined into one to connect the water-surface body 100 and the underwater body 200.

As an example, the second connection member 400 includes a connecting cable or connecting cord, etc. The first connection member 300 includes a connecting cable or connecting cord, etc.

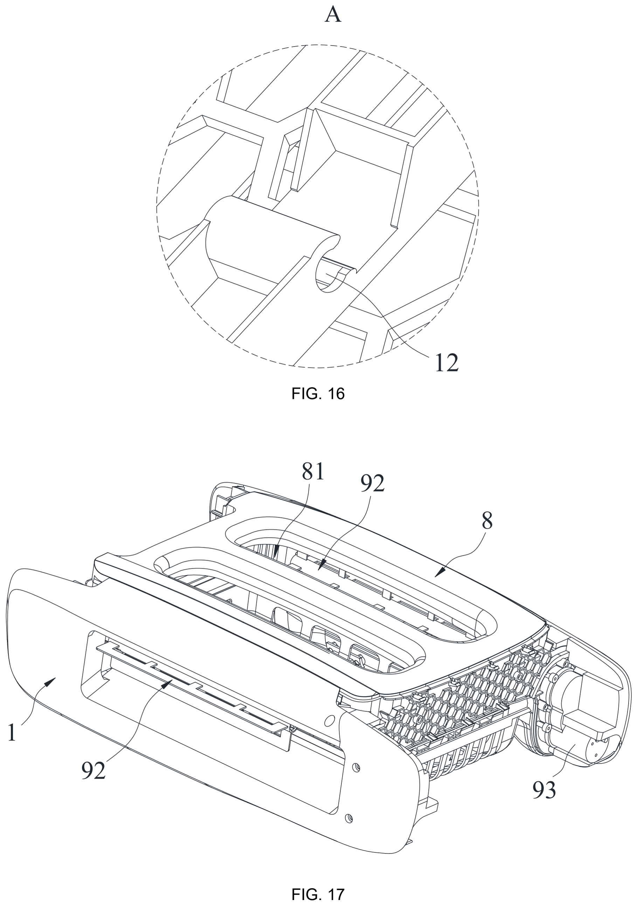

For ease of explanation, the specific structures that the water-surface body 100 may adopt will be described below in conjunction with FIGS. 11 and 13-18.

In some embodiments, as shown in FIGS. 11 and 13, the water-surface body 100 further includes a first body 1. When the underwater body 200 further includes a float, to achieve a detachable connection between the float and the water-surface body 100, as shown in FIGS. 11, 13, and 14, the first body 1 of the water-surface body 100 is provided with a mounting groove 11, and the float is selectively mounted in the mounting groove 11. Exemplarily, the float can be mounted in the mounting groove 11 via a magnetic structure or a snap-fitting structure, so that the underwater body 200 is able to drag the water-surface body 100 to move across the water surface through the float, while simultaneously providing power to the water-surface body 100 or enabling communication with the water-surface body 100.

To ensure proper mounting of the float, the sensor module 25 of the water-surface body 100 may further include a third sensor 253, which is mounted on the first body 1 and is configured to detect whether the float is connected to the main body of the water-surface body 100.

In some embodiments, as shown in FIGS. 11, 13, and 14, to ensure the simplicity and compactness of the overall structure, the mounting groove 11 is located on the tail part of the first body 1. Additionally, to facilitate control of the movement of the water-surface body 100, a limiting hook 12 is provided at the bottom of the first body 1 near the front side. The first connection member 300 can pass through the limiting hook 12 and be hooked onto it, thereby limiting the first connection member 300 to the bottom of the first body 1 along the forward direction via the limiting hook 12.

As an example, as shown in FIGS. 11 and 13, the first connection member 300 is guided from the tail part of the first body 1 to the front side of the first body 1 at the bottom of the first body 1, and then enters the water to connect with the underwater body 200. In this way, when the float is arranged at the tail part of the first body 1, the underwater body 200 can better pull the water-surface body 100 along the target direction, allowing better control of the movement direction of the water-surface body 100.

In some embodiments, as shown in FIG. 8, the water-surface body 100 further includes a first body 1 and a connecting part 7. The first body 1 is configured to float in the working water area. The connecting part 7 is detachably connected to the underwater body 200. The first body 1 or the float is structurally connected to the connecting part 7 via the first connection member 300. The first body 1 and/or the float are also electrically or communicatively connected to the connecting part 7 via the first connection member 300.

Alternatively, when the underwater body 200 includes a mounting part 260, the connecting part 7 is detachably connected to the mounting part 260 of the underwater body 200. Thus, when the underwater body 200 is suspended at different depths in the working water area or sink to the bottom of the working water area to carry out cleaning, the connection between the mounting part 260 and the connecting part 7 allows the underwater body 200 and the water-surface body 100 to be connected as a unitary unit for operation. When the underwater body 200 and the water-surface body 100 are not required to operate as a unitary unit, the mounting part 260 can be separated from the connecting part 7.

It will be understood that when the underwater body 200 operates below the liquid surface and the first body 1 is able to float on the liquid surface, the connecting part 7 can extend into the water to connect with the mounting part 260 of the underwater body 200. In this way, the configuration of the first connection member 300 ensures that the connecting part 7 can extend and connect with the mounting part 260.

As an example, the connection between the mounting part 260 and the connecting part 7 can follow the same manner as the connection between the fitting part 3 and the float, which will not be repeated here.

As an example, the specific structure of the mounting part 260 can refer to the structure of the fitting part 3, and the structure of the connecting part 7 is adapted to the structure of the mounting part 260.

In some embodiments, the driving module 23 of the water-surface body 100 is mounted on the first body 1, and the driving module 23 is configured to drive the water-surface body 100 to move. The driving module 23 includes at least one of a propulsion mechanism 231 for driving the water-surface body 100 to travel, and an attitude adjustment mechanism 232 for adjusting the attitude of the water-surface body 100. In other embodiments, the driving module 23 of the water-surface body 100 may be omitted or not operate.

In some embodiments, the power supply module 21 of the water-surface body 100 is mounted on the first body 1 and is configured to supply power to at least one of the electronic component of the water-surface body 100 and the underwater body 200. The electronic component of the water-surface body 100 include at least the driving module 23. The power supply module 21 includes at least one of a solar charging panel 211, a battery, or a charging interface 213.

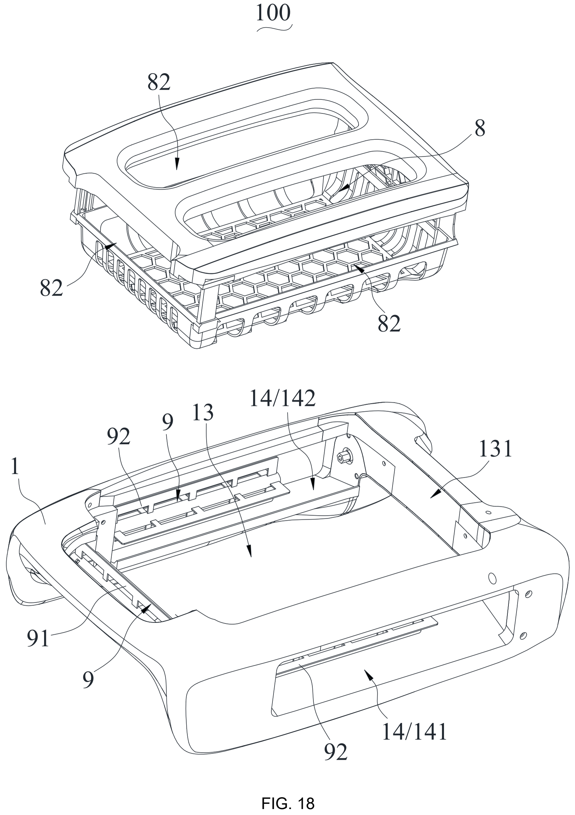

In some embodiments, as shown in FIG. 18, the water-surface body 100 further includes a collection basket 8 and an auxiliary collection assembly 9. An internal cavity 13 is formed inside the first body 1, and an opening 131 is provided at the top of the internal cavity 13. That is, the internal cavity 13 of the first body 1 communicates with the outside through the opening 131. The collection basket 8 is detachably mounted in the internal cavity 13 through the opening 131. It will be understood that the collection basket 8 is able to pass through the opening 131 to be inserted into the internal cavity 13 of the first body 1, and can be fixedly mounted to the first body 1, or released from the fixation to the first body 1 and detached from the first body 1 through the opening 131, so that the collection basket 8 can be detached or mounted from the top of the first body 1. This helps ensure the compactness of the overall water-surface body 100, making it suitable for small water bodies such as pools.

It should be noted that, to ensure the structural stability of the water-surface body 100, the shape of the collection basket 8 is adapted to the internal shape of the internal cavity of the first body 1. The collection basket 8 may have a prismatic structure, a cylindrical structure, or an irregular columnar structure, etc. As an example, the collection basket 8 has approximately a rectangular- prismatic structure, and correspondingly, the internal shape of the internal cavity of the first body 1 is approximately rectangular.

As shown in FIG. 8, a plurality of water-surface collection openings 14 communicating with the internal cavity 13 are formed on the peripheral walls of the first body 1. Correspondingly, a collection cavity 81 is formed inside the collection basket 8. Apertures 82 are formed on the peripheral walls of the collection basket 8 at the positions corresponding to respective water-surface collection openings 14, and each aperture 82 communicates with the collection cavity 81 and the corresponding water-surface collection opening 14. It is understood that when the collection basket 8 is not mounted in the first body 1, the internal cavity 13 of the first body 1 can still communicate with the outside through the water-surface collection openings 14; when the collection basket 8 is mounted in the internal cavity 13 of the first body 1, the collection cavity 81 communicates with the outside through the apertures 82 and the water-surface collection openings 14 in sequence, for collecting and accommodating floating objects on the water surface.

To enlarge the collection range of the water-surface body 100 and improve its cleaning effect and efficiency, the water-surface collection openings 14 face toward the traveling direction of the first body 1. As an example, the water-surface collection openings 14 are provided on the front side of the first body 1;
and/or, the water-surface collection openings 14 face both lateral sides of the traveling direction of the first body 1; exemplarily, at least one of the left and right sides of the first body 1 is provided with a water-surface collection opening 14.
and/or, the water-surface collection openings 14 face the tail part of the first body 1; exemplarily, a water-surface collection opening 14 is provided on the rear side of the first body 1, and at least two sides of the first body 1 are provided with the water-surface collection openings 14.

It will be understood that at least two of the front, left, right and rear sides of the first body 1 are provided with the water-surface collection openings 14. This facilitates the simultaneous collection of floating objects from different sides of the first body 1, allowing the water-surface body 100 to quickly and thoroughly collect floating objects without requiring excessive turning operations.

To further improve cleaning effect and efficiency, the auxiliary collection assemblies 9 are mounted on the first body 1 at positions corresponding to the water-surface collection openings 14 to capture and collect floating objects into the collection cavity 81. It will be understood that during the movement of the water-surface body 100, the auxiliary collection assemblies 9 can capture floating objects around the water-surface body 100 through the corresponding water-surface collection openings 14, and enabling floating objects near the water-surface collection openings 14 to quickly pass through the water-surface collection openings 14 and enter the collection cavity 81 through the apertures 82.

It should be noted that each auxiliary collection assembly 9 may be rolling structure arranged inside the corresponding water-surface collection opening 14, or a material-gathering structure that extends out of the corresponding water-surface collection opening 14, or other suitable structures. The specific structure adopted by the auxiliary collection assemblies 9 to accelerate the collection of floating objects will not be elaborated here.

In general, this water-surface body 100 simplifies the overall structure and ensures its compactness by forming an internal cavity 13 inside the first body 1 and detachably mounting the collection basket 8 in the internal cavity 13 through the opening 131, making it suitable for use in pools and similar water bodies. Furthermore, the water-surface body 100 are provided with water-surface collection openings 14 communicating with the internal cavity 13 on at least two sides of the first body 1, allowing it to simultaneously collect floating objects from different sides of the first body 1. This expands the collection range and eliminates the need for excessive turning operations or repeated back-and-forth movements, enabling quick and thorough collection of surrounding floating objects and facilitating route planning. This water-surface body 100 is not only simple in structure and easy to operate, but also provides excellent cleaning performance and high efficiency.

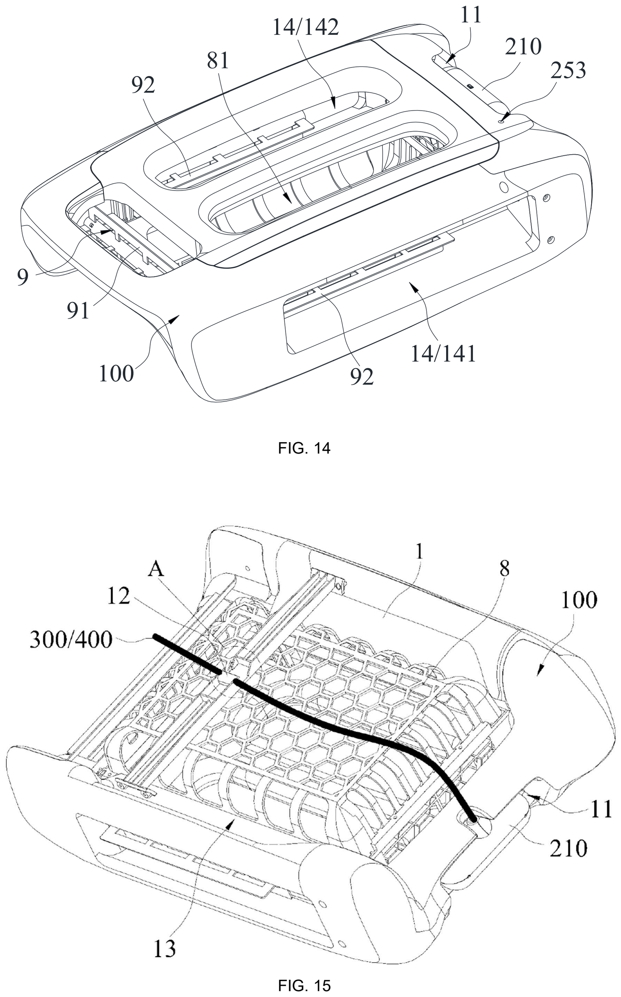

In some embodiments, as shown in FIGS. 14 and 18, the water-surface collection opening 14 formed on the front side of the first body 1 is a first collection opening 141, and the water-surface collection openings 14 formed on the left and right sides of the first body 1 are the second collection openings 142. Exemplarily, in this embodiment, the first body 1 is provided with the water-surface collection openings 14 on the front, left, and right sides thereof, that is, it is provided with one first collection opening 141 and two second collection openings 142, for a total of three water-surface collection openings 14, to improve the cleaning effect and efficiency of the water-surface body 100.

Of course, in other embodiments, depending on actual needs, the water-surface collection openings 14 may be provided on the front and left sides of the first body 1, or on the front and right sides of the first body 1. That is, in addition to providing a water-surface collection opening 14 on the front side of the first body 1, a water-surface collection opening 14 may alternatively be provided on the left or right side of the first body 1 so as to realize a single-side aperture 82.

As shown in FIGS. 14 and 18, each auxiliary collection assembly 9 includes a first rolling assembly 91, a second rolling assembly 92, and a first driving device 93. Both the first rolling assembly 91 and the second rolling assembly 92 are mounted on the first body 1, with the first rolling assembly 91 corresponding to the first collection opening 141 and the second rolling assembly 92 corresponding to the corresponding second collection opening 142. The first rolling assembly 91 is configured to assist in collecting floating objects near the first collection opening 141, and the second rolling assembly 92 is configured to assist in collecting floating objects near the second collection opening 142.

In addition, the first driving device 93 is configured to drive the second rolling assembly 92 to rotate, and the first rolling assembly 91 rotates in conjunction with the second rolling assembly 92. In this way, the number of driving devices can be minimized, which helps to reduce the overall weight of the machine, making it easier to float on the water surface to carry out collection.

Similarly, for ease of explanation, the specific structures that the underwater body 200 may adopt will be described below in conjunction with FIGS. 12, 13, and 19-23.

In some embodiments, as shown in FIGS. 12 and 13, the underwater body 200 includes a second body 220, which is configured to be suspended at different depths in the working water area or sink to the bottom of the working water area to perform cleaning operations. As shown in FIGS. 9-11 and 13, when the cleaning robot 1000 further includes at least a float, the second body 220 is connected to the float via the first connection member 300, the float being detachably connected to the water-surface body 100. The second body 220 may also be electrically or communicatively connected to the float via the first connection member 300.

Alternatively, the cleaning robot 1000 further includes a second connection member 400, through which the second body 220 is connected to a float structure. The second body 220 may also be electrically or communicatively connected to the float via the second connection member 400, the float being detachably connected to the water-surface body 100. When the second body 220 operates below the liquid surface, the float can float on the liquid surface, allowing it to connect with the water-surface body 100 floating on the surface.

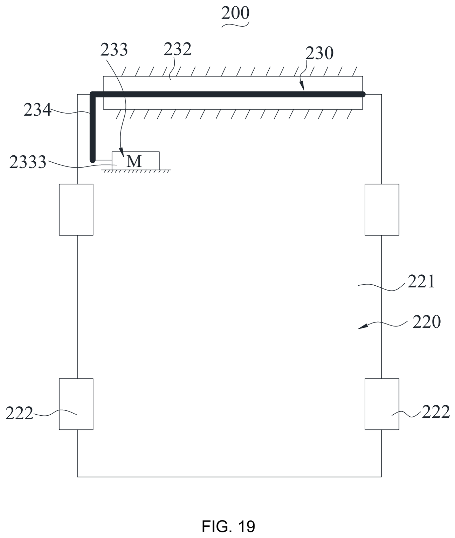

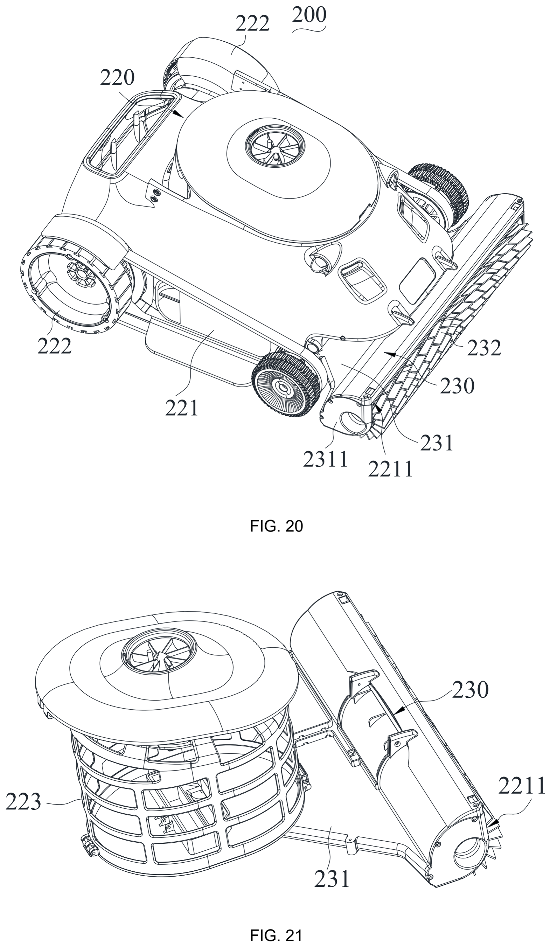

In some embodiments, as shown in FIGS. 19 and 20, the second body 220 includes a chassis 221 and driving wheels 222, which are configured to drive the chassis 221 to move. A collection chamber 223 is formed within the second body 220 (referring to FIG. 21), and the chassis 221 has an underwater collection opening 2211 that communicates with the collection chamber 223. That is, the underwater body 200 can collect debris into the collection chamber 223 through the underwater collection opening 2211. Of course, the collection chamber 223 may be detachably mounted relative to the chassis 221 to facilitate the cleaning of dirt and debris within the collection chamber 223.

As an example, to facilitate crawling of the underwater body 200, two driving wheels 222 may be provided as rear wheels, and correspondingly, two driven wheels may be provided as front wheels, such that the underwater body 200 is equipped with a total of four wheels. Of course, in other embodiments, the number and position of the driving wheels 222 and driven wheels may be determined according to actual needs, and no particular limitation is imposed herein, as long as the underwater body 200 can crawl stably.

As shown in FIGS. 12, 13, and 20, in this specific embodiment, the second body 220 further includes a body and a filter screen (not shown). The body is mounted on the chassis 221, enclosing an accommodating cavity (not shown) with the chassis 221 to accommodate components such as the collection chamber 223. Together with the chassis 221, the driving wheels 222, the driven wheels, and other elements, the overall appearance resembles that of a car. Of course, in other embodiments, the second body 220 may have other shapes and structures, which are not specifically limited here.

As shown in FIGS. 12 and 20, the underwater body 200 further includes a cleaning brush assembly 230, which is disposed on the front and/or rear side of the second body 220. As shown in FIG. 20, the cleaning brush assembly 230 includes a main body 231 and a roller brush assembly 232. The main body 231 is disposed on the second body 220, and the roller brush assembly 232 is rotatably disposed on the main body 231. Specifically, in this embodiment, the main body 231 is disposed on the second body 220 along the width direction thereof, namely, along the axial direction of the driving wheels 222. The roller brush assembly 232 is disposed on the main body 231 along the width direction of the second body 220 and rotates axially relative to the main body 231 in the working state so as to clean the bottom, walls, and waterline of the pool when the second body 220 moves forward or backward.

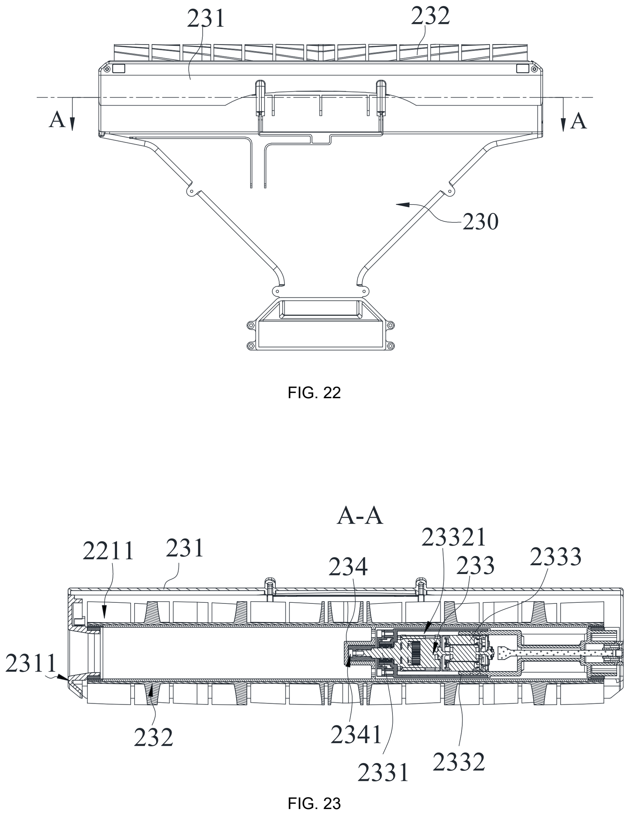

In some embodiments, as shown in FIGS. 19 and 23, the cleaning brush assembly 230 further includes a second driving device 233, which is configured to independently drive the roller brush assembly 232 to rotate axially relative to the main body 231, so that the roller brush assembly 232 rotates independently of the driving wheels 222, which further enhances the cleaning effect and cleaning efficiency, and saves power consumption.

It will be understood that regardless of the state of the second body 220, by independently driving the movement of the second body 220 and the movement of the roller brush assembly 232, the underwater body 200 can adjust the moving speed and direction of the second body 220, and independently adjust in real time the rotation speed, direction and the rotation status of the roller brush assembly 232, so as to improve the cleaning effect and cleaning efficiency of the underwater body 200, and maximize the utilization of battery energy of the underwater body 200 to improve the endurance of the machine.

As an example, when a user needs to switch to a remote-control mode to perform deep or targeted cleaning of locally contaminated areas such as the bottom of a right-angled pool, waterline, or heavily soiled regions, the roller brush assembly 232 is maintained in a high-speed rotational cleaning state. **In** this case, the user only needs to control the moving speed and direction of the chassis 221, so that the rotational speed and rotational direction of the roller brush assembly 232 do not change with the movement of the chassis 221, which facilitates deep or targeted cleaning of local areas and helps maintain a stable cleaning performance.

As a further example, in scenarios such as pool bottom mapping or position calibration, when the roller brush assembly 232 and the chassis 221 are controlled independently, it can be achieved that the roller brush assembly 232 does not roll when the second body 220 moves. That is, the additional power consumption due to the unnecessary rotation of the roller brush assembly 232 can be avoided, thereby maximizing the utilization of the battery energy and improve the battery life.

In some embodiments, in order to enable the second driving device 233 to independently drive the roller brush assembly 232 to rotate, the second driving device 233 is mounted inside the second body 220 and is in a transmission connection with the roller brush assembly 232.

Alternatively, in other implementations, as shown in FIGS. 20 and 23, when the roller brush assembly 232 is driven independently by the second driving device 233, in order to achieve stable rotation of the roller brush assembly 232 and simplify the structure of the cleaning brush assembly 230, the main body 231 of the cleaning brush assembly 230 includes a supporting portion 2311, and the second driving device 233 is mounted on the supporting portion 2311. The roller brush assembly 232 has a hollow structure and is sleeved on the second driving device 233, forming a transmission connection with the second driving device 233.

Briefly, the second driving device 233 is disposed in the roller brush assembly 232 along the axial direction to drive the roller brush assembly 232 to rotate. The hollow structure of the roller brush assembly 232 is fully utilized without occupying other space of the water-surface body 200, thereby ensuring the compactness of the cleaning brush assembly 230, maximizing the volume of the collection chamber 223, and improving the dirt-collection capability of the underwater body 200.

In some embodiments, to provide independent driving force to the roller brush assembly 232 when the second driving device 233 is disposed in the roller brush assembly 232, as shown in FIG. 23, a transmission part 234 is arranged inside the roller brush assembly 232. The transmission part 234 includes a shaft connecting groove 2341, and the cross-section of the shaft connecting groove 2341 is a non-cylindrical surface. Correspondingly, the second driving device 233 includes a driving shaft 2331, which is inserted into the shaft connecting groove 2341, thereby realizing the transmission connection between the second driving device 233 and the roller brush assembly 232.

In some embodiments, to realize the driving function of the second driving device 233, as shown in FIG. 23, the second driving device 233 includes a mounting cylinder 2332 and a driving member 2333. A mounting cavity 23321 is formed in the mounting cylinder 2332. One end of the mounting cylinder 2332 (specifically, the right end) is mounted on the main body 231. The main body 231 portion of the driving member 2333 is mounted in the mounting cavity 23321 on the other end of the mounting cylinder 2332 (specifically, the left end). An output shaft of the driving member 2333 extends out of the mounting cylinder 2332 and is in transmission connection with the roller brush assembly 232.

It should be noted that the output shaft of the driving member 2333 is the above-mentioned driving shaft 2331 of the second driving device 233. That is, the output shaft is inserted into the shaft connecting groove 2341 within the roller brush assembly 232 through a coupling to realize the transmission connection between the driving member 2333 and the roller brush assembly 232.

As an example, in this embodiment, the length of the mounting cylinder 2332 is less than the width of the roller brush assembly 232, and the shaft connecting groove 2341 is formed in the middle part inside the roller brush assembly 232 and opens toward one end.

As shown in FIGS. 2 and 3, an embodiment of the present application further provides a water-surface body 100, which is configured to float on the surface of the working water area and is detachably connected to the underwater body 200 of the cleaning robot 1000. The water-surface body 100 includes a functional module 2, which includes at least one of a power supply module 21, a collection module 22, a driving module 23, a communication module 24, a sensor module 25, an alert module 26, a water-quality detection module 27, or a water-quality improvement module 28.

The cleaning robot 1000 provided in the above embodiment is configured such that the water-surface body 100 is detachably connected to the underwater body 200, and the water-surface body 100 includes a functional module 2, which includes at least one of a power supply module 21, a collection module 22, a driving module 23, a communication module 24, a sensor module 25, an alert module 26, a water-quality detection module 27, or a water-quality improvement module 28. Therefore, when the water-surface body 100 or the underwater body 200 needs to be used independently, the water-surface body 100 and the underwater body 200 can be separated so that at least one of the water-surface body 100 and the underwater body 200 operates flexibly and independently according to actual needs, reducing the electrical load and weight of the cleaning robot 1000.

When the water-surface body 100 and the underwater body 200 need to operate together, the water-surface body 100 and the underwater body 200 can be assembled and connected. This ensures that the cleaning robot 1000 can perform cleaning operations through the underwater body 200, in addition, the cleaning robot 1000 can also provide functions corresponding to at least one of the following modules through the water-surface body 100: the power supply module 21, collection module 22, driving module 23, communication module 24, sensor module 25, alert module 26, water-quality detection module 27, and water-quality improvement module 28. This expands the functionality of the cleaning robot 1000, diversifying its functions to meet the needs of different scenarios, thereby making it highly practical for market promotion and application.

As an example, the water-surface body 100 includes the water-surface body 100 of any of the above-mentioned embodiments. The underwater body 200 includes the underwater body 200 of any of the above-mentioned embodiments.

As shown in FIG. 9, in some embodiments, the power supply module 21 includes a solar charging panel 211, a first battery 212, and a charging interface 213. The solar charging panel 211 of the water-surface body 100 utilize solar energy to power the water-surface body 100, the first battery 212 of the water-surface body 100 can supply power to the water-surface body 100, and a second battery (not shown) of the underwater body 200 can supply power to the underwater body 200. The power supply systems of the water-surface body 100 and the underwater body 200 may also be electrically connected to achieve power complementarity, allowing selective use of different components depending on specific application scenarios. As an example, after the first battery 212 is fully charged, the solar charging panel 211 can charge the second battery of the underwater body 200. The water-surface body 100 may be equipped with a charging interface 213, through which the user may charge the water-surface body 100. The user may also charge the underwater body 200 via the charging interface 213, eliminating the need to retrieve the underwater body 200 from water for charging, thus improving charging convenience. As an example, as shown in FIGS. 1, 4, and 9, the underwater body 200 may be charged by connecting the charging interface 213 to the float and the second connection member 400. Similarly, as shown in FIGS. 8 and 9, the underwater body 200 may be charged by connecting the charging interface 213 to the mounting part 260 and the connecting part 7.

As shown in FIG. 10, in some embodiments, the first sensor 251 includes a binocular vision sensor 2511, a LiDAR sensor 2512, and a Global Positioning System (GPS) sensor. The water-surface body 100 can establish a full-map mode for positioning and navigation on the water surface via its binocular vision sensor 2511, LiDAR sensor 2512, and GPS sensor 2513. In addition, the water-surface body 100 may further be provided a second sensor 252 facing downward, which includes a vision sensor 2521 and an ultrasonic sensor 2522, to track the underwater body 200 and determine its relative position. Finally, a float connects the water-surface body 100 and the underwater body 200, enabling communication therebetween and assisting the navigation and positioning of the underwater body 200, thereby better planning the overall cleaning path.

As shown in FIGS. 9 and 10, in some embodiments, the collection module 22 includes a skimmer 221 and a debris collection module 222. The LiDAR sensor 2512 of the water-surface body 100 is capable of performing full-map scanning. Using the full-map functionality of the LiDAR sensor 2512, the water-surface body 100 may perform targeted area cleaning of the water surface or the underwater region by means of the skimmer 221 and the debris collection module 222. Alternatively, a patrol mode may be implemented using the binocular vision sensor 2511, enabling active identification of floating objects on the water surface, and the floating objects may then be removed using the skimmer 221 and the debris collection module 222.

In the description of the present application, it should be noted that, unless otherwise expressly specified and defined, the terms "mounted", "connected", "connection", "mechanical coupling", and "coupling" should be interpreted in a broad sense. For example, they may refer to a fixed connection, a detachable connection, or an integral connection. They may refer to a mechanical connection or an electrical connection. They may refer to a direct connection or an indirect connection through an intermediate medium, and may refer to the internal communication of two components or the interaction between two components. Mechanical coupling or coupling of two components includes direct coupling and indirect coupling, such as a direct fixed connection or a connection through a transmission mechanism. Those skilled in the art can understand the specific meaning of the above terms in the present application according to the specific circumstances.

In the present application, unless otherwise expressly specified and defined, a first feature "above" or "below" a second feature may indicate a direct contact between the first and second features, or a non-direct contact between the first and second features through another feature therebetween. Furthermore, a first feature "above", "over", and "on" the second feature includes situations where the first feature is directly above or diagonally above the second feature, or simply indicates that the first feature is at a higher horizontal level than the second feature. A first feature "below", "beneath", and "under" the second feature includes situations where the first feature is directly below or diagonally below the second feature, or simply indicates that the first feature is at a lower horizontal level than the second feature.

The foregoing disclosure provides many different embodiments or examples for implementing different structures of the present application. To simplify the disclosure, only specific examples of components and arrangements are described above. Of course, these are merely examples and are not intended to limit the scope of the present application. Furthermore, reference numerals and/or letters may be repeated in different examples; such repetition is for simplification and clarity and does not indicate a relationship between the various embodiments and/or arrangements discussed. In addition, examples of various specific processes and materials are provided in the present application, but those skilled in the art will recognize the application of other processes and/or the use of other materials.

In the description of this specification, the references to terms such as "one embodiment", "some embodiments", "exemplary embodiment", "example", "specific example", or "some examples", etc., indicate that a specific method step, feature, structure, material, or characteristic described in connection with an embodiment or example is included in at least one embodiment or example of the present application. In this specification, the illustrative expressions of the above terms do not necessarily refer to the same embodiment or example. Furthermore, the specific method steps, features, structures, materials, or characteristics described may be combined in any suitable manner in one or more embodiments or examples.

The above description is merely a specific embodiment of the present application, but the scope of protection of the present application is not limited thereto. Any person skilled in the art can easily conceive of various equivalent modifications or substitutions within the technical scope disclosed in the present application, and these modifications or substitutions should all fall within the scope of protection of the present application. Therefore, the scope of protection of the present application should be determined by the scope of the appended claims.

## Claims

1. A cleaning robot, comprising:
a water-surface body, configured to float on a surface of a working water area; and
an underwater body, detachably connected to the water-surface body and configured to clean at least one of the working water area and a wall surface of a pool;
wherein the water-surface body comprises:
a functional module, including at least one of a power supply module, a collection module, a driving module, a communication module, a sensor module, an alert module, a water-quality detection module, or a water-quality improvement module.

2. The cleaning robot according to claim 1, wherein the detachable connection between the underwater body and the water-surface body includes at least one of a magnetic connection, a snap fitting connection, a threaded fastening connection, and an insertion connection; and/or, the underwater body comprises:
a float, configured to float on the surface of the working water area;
the water-surface body further comprises:
a fitting part detachably connected to the float.

3. The cleaning robot according to claim 2, wherein the fitting part comprises a first conductive connecting sub-part, the float comprises a second conductive connecting sub-part, and the first conductive connecting sub-part is configured to detachably connected to the second conductive connecting sub-part.

4. The cleaning robot according to claim 3, wherein the fitting part is equipped with a first magnetic member, and the first magnetic member is correspondingly disposed with the first conductive connecting sub-part;
the underwater body is equipped with a second magnetic member, the second magnetic member is correspondingly disposed with the second conductive connecting sub-part, and the first magnetic member is capable of being magnetically engaged with the second magnetic member; and/or
the fitting part further includes:
a liquid-resistant member, disposed around the first conductive connecting sub-part to prevent liquid from entering the first conductive connecting sub-part and the second conductive connecting sub-part when they are connected.

5. The cleaning robot according to claim 3, wherein the water-surface body further comprises a first control switch and a first circuit, when the water-surface body is separated from the underwater body, the first control switch is configured to control the first conductive connecting sub-part to electrically disconnect from the first circuit; and/or;
the underwater body comprises a second control switch and a second circuit, when the water-surface body is separated from the underwater body, the second control switch is configured to control the second conductive connecting sub-part to electrically disconnect from the second circuit.

6. The cleaning robot according to claim 2, wherein the water-surface body comprises:
a locking part, movably disposed on the fitting part and configured to engage with the fitting part to lock the float.

7. The cleaning robot according to claim 1, wherein the functional module of the water-surface body further comprises at least one of a cleaning module, a safety module, or an entertainment module;
and/or, the power supply module is configured to supply power to at least one of an electronic component of the water-surface body and the underwater body;
the power supply module includes at least one of a solar charging panel, a battery, or a charging interface;
and/or, the collection module is configured to collect debris and/or oil contaminants in the working water area, and the collection module includes at least one of a skimmer, an oil skimmer, or a debris collection module;
and/or, the driving module is configured to drive the water-surface body to move;
the driving module includes at least one of a propulsion mechanism or an attitude adjustment mechanism, wherein the propulsion mechanism is configured to drive the water-surface body to move, and the attitude adjustment mechanism is configured to adjust an attitude of the water-surface body; the propulsion mechanism and the attitude adjustment mechanism both comprise at least one of a motor, a servo motor, a propeller structure, a sail, or a jet propulsion structure; and/or, the communication module is configured to establish a communication connection between the cleaning robot and an external equipment;
and/or, the sensor module comprises:
a first sensor configured to detect a first position information of the water-surface body;
and/or, the underwater body is capable of acquiring a second position information of the underwater body, so that the underwater body is able to control its movement according to the second position information; alternatively, the sensor module comprises:
a second sensor configured to detect environmental information around the water-surface body;
the environmental information comprises at least one of a second position information of the underwater body, a position information of debris, and a position information of obstacles; when the environmental information includes the second position information of the underwater body, the water-surface body is capable of communicating with the underwater body so that the underwater body can obtain the second position information and control the movement of the underwater body according to the second position information;
and/or, the water-quality detection module is configured to detect water quality parameters of the liquid;
and/or, the water-quality improvement module is configured to dispense a water treatment material.

8. The cleaning robot according to claim 1, wherein the cleaning robot further comprises:
a first connection member, through which the water-surface body is detachably connected to the underwater body; and/or
the underwater body further comprises a float detachably connected to the water-surface body;
alternatively, the cleaning robot further comprises a second connection member, and the underwater body further comprises a float floating on the liquid surface and detachably connected to the underwater body through the second connection member.

9. The cleaning robot according to claim 8, wherein the water-surface body further comprises a first body;
when the underwater body further comprises the float, the first body is provided with a mounting groove, and the float is selectively mounted in the mounting groove;
the sensor module of the water-surface body further comprises:
a third sensor configured to detect whether the float is connected to the first body.

10. The cleaning robot according to claim 9, wherein the mounting groove is located on a tail part of the first body; a limiting hook is arranged on a bottom part of the first body for the first connection member to pass through, so as to control the movement of the water-surface body.

11. The cleaning robot according to claim 8, wherein the water-surface body further comprises:
the first body configured to float in the working water area;
a connecting part detachably connected to the underwater body; alternatively, when the underwater body includes a mounting part, the connecting part is detachably connected to the mounting part of the underwater body;
the first body or the float is connected to the connecting part through the first connection member, and the first body and/or the float are also electrically or communicatively connected to the connecting part through the first connection member.

12. The cleaning robot according to claim 11, wherein the driving module of the water-surface body is mounted on the first body and is configured to drive the water-surface body to move; the driving module comprises at least one of a propulsion mechanism or an attitude adjustment mechanism, wherein the propulsion mechanism is configured to drive the water-surface body to move, and the attitude adjustment mechanism is configured to adjust an attitude of the water-surface body.

13. The cleaning robot according to claim 12, wherein the propulsion mechanism and the attitude adjustment mechanism each include at least one of a motor, a servo motor, a propeller structure, a sail, or a jet propulsion structure;
and/or, the power supply module of the water-surface body is mounted on the first body and is configured to supply power to at least one of an electronic component of the water-surface body or the underwater body;
the electronic component of the water-surface body includes at least the driving module; the power supply module includes at least one of a solar charging panel, a battery, or a charging interface.

14. The cleaning robot according to claim 11, wherein an internal cavity is formed inside the first body, and an opening is formed at the top of the internal cavity;
a plurality of water-surface collection openings that communicate with the internal cavity are provided on peripheral walls of the first body, and the water-surface collection openings are provided on at least two sides of the first body; and the water-surface collection openings face a traveling direction of the first body, and/or the water-surface collection openings face two lateral sides of the traveling direction of the first body; and/or the water-surface collection openings face the tail part of the first body;
the water-surface body further comprises:
a collection basket having a collection cavity formed therein; wherein the collection basket is detachably mounted in the internal cavity through the opening; apertures are formed on peripheral walls of the collection basket at positions corresponding to respective water-surface collection openings, and each of the apertures communicates with the collection cavity and the corresponding water-surface collection opening;
an auxiliary collection assembly mounted on the first body at the positions corresponding to respective water-surface collection openings to capture and collect floating objects into the collection cavity.

15. The cleaning robot according to claim 14, wherein a water-surface collection opening formed on the front side of the first body is a first collection opening, and water-surface collection openings formed on the left and right sides of the first body are second collection openings; the auxiliary collection assembly includes a first rolling assembly, a second rolling assembly, and a first driving device, the first rolling assembly and the second rolling assembly are both disposed on the first body, with the first rolling assembly corresponding to the first collection opening, and the second rolling assembly corresponding to the second collection openings; the first driving device is configured to drive the second rolling assembly to rotate, and the first rolling assembly rotates in conjunction with the second rolling assembly.

16. The cleaning robot according to claim 8, wherein the underwater body comprises:
a second body configured to be suspended at different depths in the working water area or sink to the bottom of the working water area to carry out cleaning operations;
when the cleaning robot further comprises at least the float, the second body is connected to the float through the first connection member, the float being detachably connected to the water-surface body, and the second body is also electrically or communicatively connected to the float through the first connection member;
alternatively, the cleaning robot further comprises the second connection member, through which the second body is connected to the float floating on the liquid surface, and the second body is also electrically or communicatively connected to the float through the second connection member.

17. The cleaning robot according to claim 16, wherein a collection chamber is formed within the second body; the second body comprises:
a chassis, an underwater collection opening communicated with the collection chamber being formed on the chassis; and
a driving wheel configured to drive the chassis to move;
the underwater body further comprises:
a cleaning brush assembly disposed on a front and/or rear side of the second body;
wherein the cleaning brush assembly comprises:
a main body disposed on the second body; and
a roller brush assembly rotatably mounted on the main body.

18. The cleaning robot according to claim 17, wherein the cleaning brush assembly further comprises:
a second driving device configured to independently drive the roller brush assembly to rotate axially relative to the main body.

19. The cleaning robot according to claim 18, wherein the second driving device is mounted in the second body and is in a transmission connection with the roller brush assembly; alternatively, the main body includes a supporting portion, the second driving device is mounted on the supporting portion, the roller brush assembly has a hollow structure and is sleeved around the second driving device and in a transmission connection with the second driving device.

20. The underwater body according to claim 19, wherein a transmission part is arranged inside the roller brush assembly, the transmission part includes a shaft connecting groove, and a cross section of the shaft connecting groove is a non-cylindrical surface;
the second driving device includes a driving shaft, which is inserted into the shaft connecting groove to realize the transmission connection between the second driving device and the roller brush assembly;
alternatively, the second driving device includes a mounting cylinder and a driving member, the mounting cylinder is formed with a mounting cavity therein, and one end of the mounting cylinder is mounted to the main body; a main body portion of the driving member is mounted inside the mounting cavity to the other end of the mounting cylinder, and an output shaft of the driving member extends out of the mounting cylinder to be in a transmission connection with the roller brush assembly.

21. A water-surface body, wherein the water-surface body is configured to float on a surface of a working water area and is detachably connected to an underwater body of a cleaning robot; the water-surface body comprises:
a functional module includes at least one of a power supply module, a collection module, a driving module, a communication module, a sensor module, an alert module, a water-quality detection module, or a water-quality improvement module.
